# EUROPEAN PATENT APPLICATION

(11) **EP 4 851 881 A1**
(43) Date of publication of application: **09.12.2026**
(21) Application number: 25305815.0
(22) Date of filing: 04.06.2025
(51) Int. Cl.: G06Q 10/02, G06K 19/077, G06Q 10/08, G09F 3/00

(54) **BAGGAGE HANDLING SYSTEM AND METHOD**

(71) Applicant: Amadeus S.A.S., 06410 Biot (FR); ICM Airport Technics Pty Ltd., Botany, NSW 2019 (AU)
(72) Inventor: LANDGREBE, Thomas, Sydney, 2076 (AU); THAO, Stephane, Sydney, 2036 (AU); CRUMPTON, Benjamin, Sydney, 2019 (AU); ROGERS, Carl, Wynnum, 4178 (AU)
(74) Representative: Samson & Partner Patentanwälte mbB

(57) **Abstract**

A touchpoint device for use in a baggage handling system is used to update an electronic bag tag on a bag that is proximate to the touchpoint device. The method performed by the touchpoint device comprises: receiving a booking identifier, the booking identifier associated with a booking stored in a departure control system accessible to the touchpoint device; detecting the presence of an electronic bag tag in proximity to the touchpoint device; receiving a baggage identifier associated with the booking; generating an optically-readable baggage identifier that incorporates the baggage identifier; and transmitting the optically-readable baggage identifier to the electronic bag tag for display thereon.

## Description

### FIELD OF THE INVENTION

The present invention relates generally to the field of baggage handling systems. More specifically, the present invention relates to baggage handling methods and systems for processing electronic bag tags in environments such as airport passenger terminals.

### BACKGROUND TO THE INVENTION

Traditionally, baggage handling at airports and other transportation hubs has relied on paper-based systems. Bag tags, typically made of paper or cardboard, are attached to each piece of luggage to identify the owner and destination. Electronic bag tags are available, but they have only found very limited take up in the industry. One reason for the limited take up relates to difficulties in integrating airline passenger and baggage data with the electronic bag tags due to the complex digital ecosystem. In addition, electronic bag tags require passengers to perform additional steps that are not associated with paper bag tags. The apps that are required to operate electronic bag tags are also complex and difficult for passengers to use.

The present invention aims to provide a baggage handling system that incorporates electronic bag tags but does not suffer from these deficiencies.

### SUMMARY OF THE INVENTION

According to a first aspect of the present invention, there is provided a baggage handling method comprising a touchpoint device: receiving a booking identifier, the booking identifier associated with a booking stored in a departure control system accessible to the touchpoint device; detecting presence of an electronic bag tag in proximity to the touchpoint device; receiving a baggage identifier associated with the booking; generating an optically-readable baggage identifier that incorporates the baggage identifier; and transmitting the optically-readable baggage identifier to the electronic bag tag for display thereon.

In some embodiments, the baggage handling method further comprises the touchpoint device: optically scanning the electronic bag tag for a scanned baggage identifier; comparing the scanned baggage identifier with the baggage identifier; and selecting a baggage handling operation depending on a result of the comparison between the scanned baggage identifier and the baggage identifier.

The result of the comparison between the scanned baggage identifier and the baggage identifier may be that the scanned baggage identifier and the baggage identifier are the same, wherein the selected baggage handling operation is causing the baggage identifier to be activated in the departure control system.

The touchpoint device may be a bag drop that includes a conveyor and wherein the method further comprises the touchpoint device detecting the presence of the electronic bag tag on the conveyor. The touchpoint device may utilise a directional antenna (such as a phased array antenna) or multiple non-directional antennas to detect the presence of the electronic bag tag on the conveyor. The phased array antenna may operate in a frequency band associated with Bluetooth communications.

In some embodiments, the method further comprises the bag drop detecting the presence on the conveyor of a bag to which the electronic bag tag is attached before detecting the presence of the electronic bag tag.

In some embodiments, the method further comprises the touchpoint device after detecting the presence of the electronic bag tag in proximity to the touchpoint device: optically scanning the electronic bag tag for an existing baggage identifier; comparing the existing baggage identifier with the baggage identifier; and in the event that the existing baggage identifier and the baggage identifier are not the same, transmitting the optically-readable baggage identifier to the electronic bag tag to overwrite the existing baggage identifier.

The touchpoint device, upon receiving the booking identifier, may automatically execute client software pertinent to the booking identified by the booking identifier and establishes a connection to a pertinent departure control system.

In some embodiments, the method further comprises the touchpoint device receiving a confirmation signal from the electronic bag tag indicating successful loading and display of the optically-readable baggage identifier. The touchpoint device, after receiving the confirmation signal, may cause the booking to be updated in the departure control system.

The touchpoint device may receive the booking identifier by scanning an optically readable code such as a barcode or QR code on the electronic bag tag or on a mobile device.

According to another aspect of the present invention, there is provided a touchpoint device for use in a baggage handling system, the touchpoint device having a processor and computer readable medium storing computer executable instructions, which when executed by the processor cause the touchpoint device to: receive a booking identifier, the booking identifier associated with a booking stored in a departure control system accessible to the touchpoint device; detect presence of an electronic bag tag in proximity to the touchpoint device; receive a baggage identifier associated with the booking; generate an optically-readable baggage identifier that incorporates the baggage identifier; and transmit the optically-readable baggage identifier to the electronic bag tag for display thereon.

At least in preferred embodiments, the present invention provides a baggage handling system with the ability to seamlessly update an electronic bag at an airport touchpoint using only a booking reference or the like. This provides a significantly simpler one-touch process for the passenger to check baggage, for example at an automatic bag drop.

Embodiments of the present invention also enable the updating of electronic bag tags using an automatic bag drop (or other touchpoint device) rather than a standalone mobile app.

Additionally, the baggage handling system can be integrated with existing baggage handling and departure control systems, allowing for seamless integration and compatibility with current infrastructure.

Typically, the computer executable instructions further cause the touchpoint device to: optically scan the electronic bag tag for a scanned baggage identifier; compare the scanned baggage identifier with the baggage identifier; and select a baggage handling operation depending on a result of the comparison between the scanned baggage identifier and the baggage identifier. The result of the comparison between the scanned baggage identifier and the baggage identifier may be that the scanned baggage identifier and the baggage identifier are the same, wherein the selected baggage handling operation is causing the baggage identifier to be activated in the departure control system.

The touchpoint device in some embodiments is a bag drop that includes a conveyor, wherein the computer executable instructions further cause the touchpoint device to detect the presence of the electronic bag tag on the conveyor. By "on the conveyor", it is understood that the bag tag may be positioned at some height above the conveyor. This is because the electronic bag tag will typically be attached to a bag that is on the conveyor and the bag tag will often be at an elevated position relative to the surface of the conveyor. The touchpoint device may utilise a directional antenna (such as a phased array antenna) or multiple non-directional antennas to detect the presence of the electronic bag tag on the conveyor. In some embodiments, the phased array antenna operates in a frequency band associated with Bluetooth communications.

The computer executable instructions may further cause the bag drop to detect the presence on the conveyor of a bag to which the electronic bag tag is attached, for example, before detecting the presence of the electronic bag tag. This has the advantage of narrowing the area of search for a bag tag to near the outside surface of the bag.

The computer executable instructions further cause the touchpoint device after detecting the presence of the electronic bag tag in proximity to the touchpoint device to: optically scan the electronic bag tag for an existing baggage identifier; compare the existing baggage identifier with the baggage identifier; and in the event that the existing baggage identifier and the baggage identifier are not the same, transmit the optically-readable baggage identifier to the electronic bag tag to overwrite the existing baggage identifier.

The touchpoint device, upon receiving the booking identifier, may automatically execute client software pertinent to the booking identified by the booking identifier and establish a connection to a pertinent departure control system.

The computer executable instructions may further cause the touchpoint device to receive a confirmation signal from the electronic bag tag indicating successful loading and display of the optically-readable baggage identifier.

The computer executable instructions may further cause the touchpoint device after receiving the confirmation signal to cause the booking to be updated in the departure control system.

In some embodiments, the touchpoint device receives the booking identifier by scanning an optically readable code such as a barcode or QR code on the electronic bag tag or on a mobile device.

### BRIEF DESCRIPTION OF THE DRAWINGS

An embodiment of the present invention will be described with reference to the accompanying drawings in which:
Figure 1 is a high-level schematic representation of an environment in which aspects of the present invention are illustrated.
Figure 2 illustrates an automatic bag drop that is suitable for implementing aspects of the present invention.
Figure 3 illustrates an alternative automatic bag drop that is suitable for implementing aspect of the present invention.
Figure 4 is a flow chart illustrating processes that are performed by components of the baggage handling system according to aspects of the present invention.
Figure 5 is a schematic illustration of an electronic bag tag that may be suitably used with aspects of the present invention.
Figure 6 illustrates the use of a plurality of non-directional antennas to detect multiple electronic bag tags and distinguish between them.
Figure 7 an alternative touchpoint device that is suitable to implement aspects of the present invention.
Figure 8 is a is a block diagram of a computer system suitable for implementing an embodiment of the present invention.

### DETAILED DESCRIPTION OF THE DRAWINGS

In the following detailed description, reference is made to accompanying drawings which form a part of the detailed description. The illustrative embodiments described in the detailed description and depicted in the drawings are not intended to be limiting. Other embodiments may be utilised and other changes may be made without departing from the spirit or scope of the subject matter presented. It will be readily understood that the aspects of the present disclosure, as generally described herein and illustrated in the drawings, can be arranged, substituted, combined, separated and designed in a wide variety of different configurations, all of which are contemplated in this disclosure.

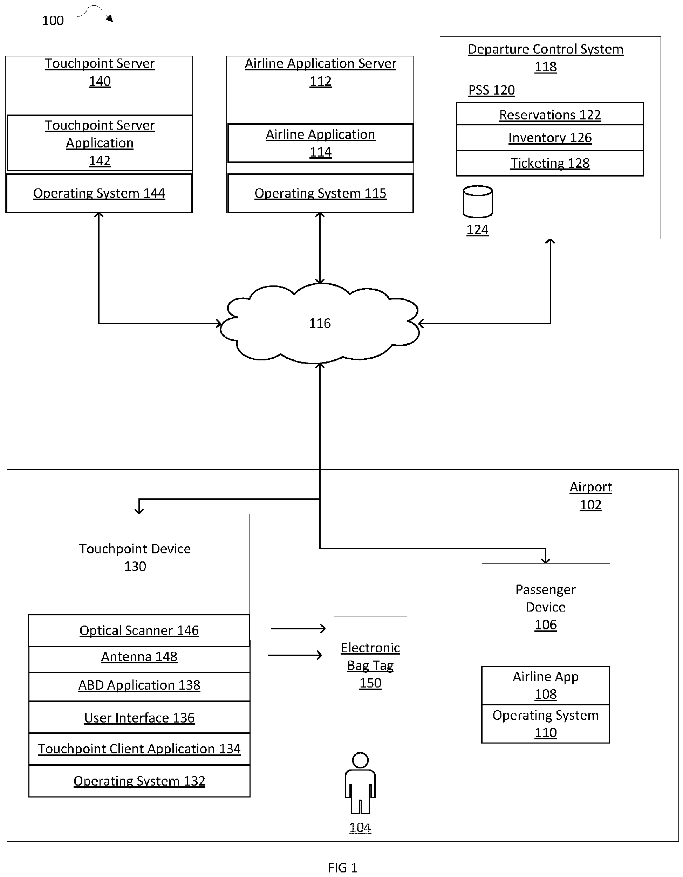

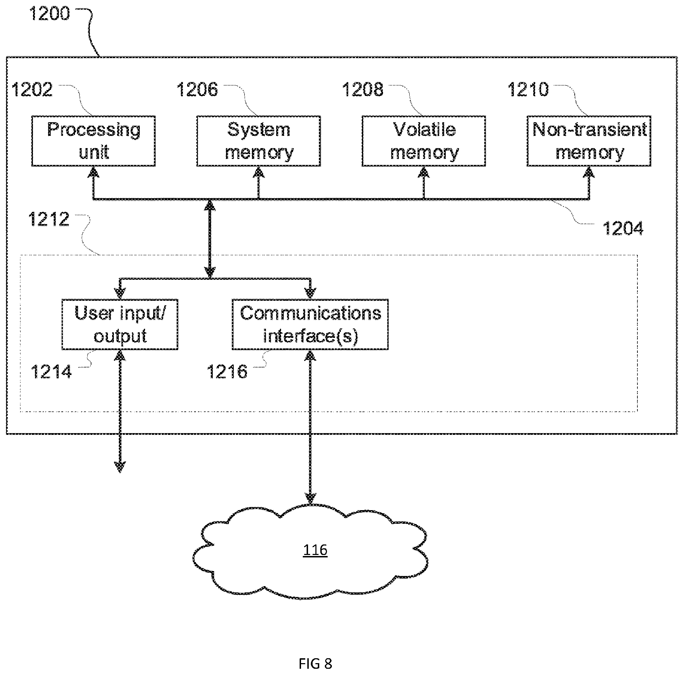

FIG. 1 schematically illustrates an environment 100 in which aspects of the present invention are implemented. In the exemplified embodiment, the environment 100 is primarily an airport 102, however those skilled in the art will appreciate that the present invention could be implemented at other mass transit locations, such as rail or sea departure points. A passenger 104 is present at the airport 102 and carries a passenger device 106, which as described below is typically a mobile device such as a mobile phone. Passenger device 106 is a computer processing system having the hardware and software components illustrated in Figure 8, including an operating system 110, such as Apple iOS^{®} or Google Android^{®}.

An airline app 108 is installed and executes on the passenger device 106. Airline app 108 facilitates passenger-facing functionalities such as booking, flight management, web and mobile check-in, seat-selection, providing access to boarding passes, loyalty scheme administration, lounge access and the like. Airline app 108 is typically the client component of a client/server application, with the server component being an airline application 114 executing on an airline application server 112. The airline application 114 performs various operations in response to receiving data from the airline app 106. As such, when executed by the airline application server 112, the airline application 114 configures the airline application server 112 to provide server-side functionality to the airline app 108. To provide this functionality, the airline application server 112 comprises an operating system 115 along with one or more suitable application programs, libraries, and/or other software infrastructure.

The airline application server 112 has been illustrated as a single system. Server 112 could however be a scalable server system comprising multiple nodes which can be commissioned/decommissioned based on processing demands. Typically, server systems are server computers that provide greater resources (e.g. processing, memory, network bandwidth) in comparison with the computers that function as client systems, such as the passenger device 106.

The airline app 108 can be provided as a web application that is executed by a web browser installed on the passenger device 106 or as a native application. When the airline app 108 is a web application, the airline application 114 will typically be, or interact with, a web server such as a server implemented with the node.js runtime environment. In this scenario, the airline app 108 accesses the airline application server 112 via an appropriate uniform resource locator (URL) and communicates with the airline application server 112 via general world-wide-web protocols (e.g. http, https, ftp) and application programming interfaces (APIs) (e.g. REST APIs). Where the airline app 108 is a native application, the airline application 114 will typically be, or interact with, an application server. In this scenario, the airline app 108 is typically programmed to communicate with the airline application server 112 using defined API calls. Airline application server 112 may be provided with both web server and application server applications to enable it to serve both web browser and native client applications.

The airline application server 112 and passenger device 106 communicate data between each other either directly or indirectly through one or more communications networks 116. Communications network 116 may comprise a local area network (LAN), a public network (such as the Internet), or a combination of networks.

The airline application server 112 is typically in operative network communication with a departure control system 118. The departure control system 118 is a mission critical system that manages operational aspects of flights, including check-in, boarding, baggage handling, load control and aircraft weight and balance. The Applicant's Altéa departure control system is an example of a departure control system suitable for implementing aspects of the present invention.

The airline application 114 communicates with the departure control system 118 through suitable APIs for the purpose of retrieving check-in statuses, boarding passes and flight updates. The communication between the airline application 114 and departure control system 118 is often mediated by the airline's passenger service system (PSS) 120. PSS 120 includes a reservation subsystem 122 for managing flight bookings, fare calculations and inventory. The reservation subsystem 122 includes a data storage 124 for storing passenger name records that contain passenger details such as names, contact information and travel itineraries. The PSS 120 includes an inventory subsystem 126 for controlling the availability of seats on flights and ensuring dynamic seat allocations based on fare classes, demand and revenue management strategies. The PSS 120 includes a ticketing subsystem 128 for managing the issuance of (typically electronic) tickets along with ticket sales, refunds and exchanges.

Aspects of the present invention aim to reduce friction points for the passenger 104 after they arrive at the airport 102, having checked into their flight using the airline app 108. Typically, as an aspect of online check-in, the airline app 108 communicates with the airline application 114, that in turn communicates with the reservation subsystem 122 of the PSS 120 to retrieve the passenger's booking from the passenger name record (PNR). The PSS 120 confirms the passenger's eligibility for check-in typically by querying the ticketing subsystem for the ticket status and the booking confirmation and time until the departure. The PSS 120 updates the PNR to reflect that the passenger has checked in and a unique check-in timestamp is recorded in the passenger name record. The passenger's checked-in status is added to the flight manifest.

Where the passenger 104 opts to check in baggage, the airline app 108 displays a data entry object on the passenger device 106, through which the passenger 104 enters the number of bags that are to be checked. The airline app 108 communicates the entered number of bags to the airline application 114, that in turn interfaces with the departure control system 118 and communicates the number of bags. Upon receipt of the number of bags, the departure control system 118 generates a baggage handling record and a unique 10-digit bag tag licence number for each bag, which consists of a 3-digit airline code and a 7-digit unique identifier assigned by the departure control system 118. The departure control system links the generated bag tag licence numbers to the passenger's 104 PNR and baggage record, ensuring the bag can be tracked throughout the journey. The bag tag license number also serves as an index number linking baggage source messages (BSM) that the departure control system 118 transmits to the airport's 102 baggage handling system.

The PSS 120 updates the passenger's 104 status to "checked in". The ticketing subsystem 128 generates an electronic boarding pass, a copy of which is transmitted to the airline application 114 for storage thereon and transmission to the airline app 108. The boarding pass typically includes the passenger's 104 name, flight details, seat assignment and a 2D barcode containing encrypted information for scanning at security and boarding gates. The barcode is typically encoded to reference the PNR and flight manifest. PSS 120 also records the license plate/s under the passenger's profile for tracking.

At the airport 102, the passenger 104 can utilise a self-service kiosk to print a bag tag for each item of checked baggage. There are typically a number of options for the passenger to interact with the self-service kiosk, including scanning a mobile barcode, boarding pass barcode or frequent flyer identification from the airline app 108, scanning an accepted form of identification (such as a passport or driver's licence), or manually entering a passenger name record, booking reference, flight number and the like into the self-service kiosk. Once the self-service kiosk receives the relevant identification information, the kiosk retrieves the passenger's 104 flight and baggage details from the PSS 120. The self-service kiosk utilizes the retrieved flight and baggage details to generate and print a bag tag. The bag tag is typically a standardized document containing the bag tag license plate number (in human readable form and as a linear or 2D barcode), passenger and flight information, routing information, priority information (if applicable) and additional operational details (such as baggage weight class and baggage handling instructions).

After the self-service kiosk prints the bag tag, the passenger 104 affixes the bag tags to the baggage and places the baggage on a belt of a bag drop machine. The bag drop machine uses an optical scanner to read the barcode encoding the bag tag licence plate number. The bag tag is scanned and the departure control system 118 updates a baggage reconciliation to track the bag, and links the bag tag licence plate number to the passenger's flight and destination.

An aspect of the present invention is a baggage handling system installed at the airport 102 that utilises special purpose touchpoint devices 130 and communication protocols between the touchpoint devices 130 and the departure control system 118. Touchpoint devices 130 are stations or kiosks with embedded computer hardware and software through which travellers perform travel-related actions. Suitable touchpoint devices for implementing aspects of the present invention are described in Applicant's PCT application PCT/EP2024/076864, the entire content of which is incorporated herein by reference.

In the illustrated embodiment, touchpoint device 130 is an automatic bag drop machine, however aspects of the present invention can also be implemented with other categories of touchpoint device, such as self-service kiosks.

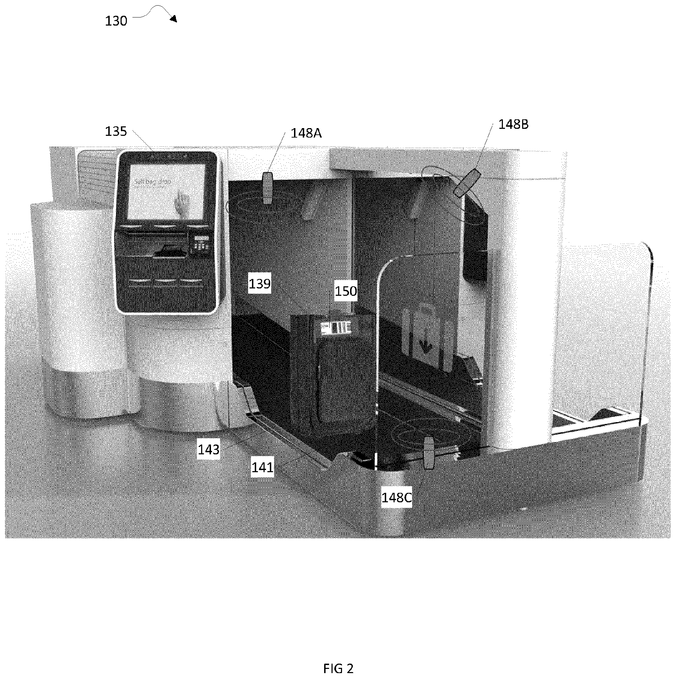

Touchpoint device 130 has an operating system 132 installed thereon, upon which a touchpoint client application 134 executes. Touchpoint client application 134 generates a user interface 136 that is displayed on touchpoint device's 130 in-built display 135 (shown in Figure 2). User interface 136 allows the touchpoint device 130 to receive information from the passenger 104 in the manner discussed above, such as by the passenger scanning a mobile barcode, boarding pass barcode or frequent flyer identification from the airline app 108, scanning an accepted form of identification (such as a passport or driver's licence), or manually entering a passenger name record, booking reference, flight number and the like into the user interface 136.

Touchpoint client application 134 is in operative network communication with a touchpoint server application 142 that executes on a touchpoint server 140. Touchpoint server 140 typically has similar hardware and software components as the airline application server 112 and in this regard includes an operating system 144 along with one or more suitable application programs, libraries, and/or other software infrastructure. Touchpoint server 140 is also in operative network communication with the departure control system 118 and effects communication therewith in a similar way as the airline application 114.

As shown in Figure 2, touchpoint device 130 is an automatic bag drop (ABD) machine. ABD machine 130 executes an ABD application 138 to control bag drop functions such as detecting a bag 139 placed on a conveyor 141, weighing the bag 139 and transporting the bag 139 on the conveyor 141 to the airport's 102 back-of-house baggage handling operations.

In preferred embodiments ABD machine 130 is a common use self service (CUSS) device. CUSS devices allow passengers to use the same self-service touchpoints at an airport regardless of the airline on which they are travelling. To implement CUSS functionality, operating system 132 automatically loads the correct touchpoint client application software 134 and switches user interfaces 136 based on the airline that the passenger 104 selects. Upon loading the pertinent client application 134 and user interface 136, the operating system 132 automatically establishes a network connection with a pertinent touchpoint server 140. In turn, the touchpoint server 140 establishes a connection with the correct departure control system 118; namely the departure control system 118 operated by or on behalf of the airline that the passenger selects.

ABD machine 130 includes an optical scanner 146 for scanning bag tags from bags that passengers 104 place on the conveyor 141. The optical scanner 146 is controlled by ABD application 138.

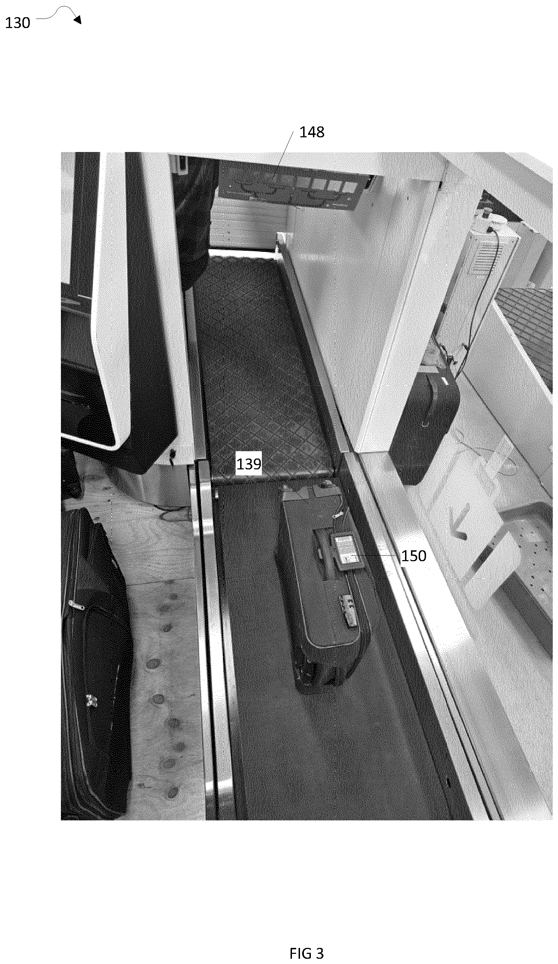

ABD machine 130 includes an antenna 148 for effecting radio frequency (RF) communication with external devices, by utilising wireless communication protocols such as Bluetooth (including Bluetooth Low Energy), RFID, UHF and NFC. Antenna 148 can take a variety of forms including an antenna system comprising multiple non-directional antennas 148A, 148B, 148C, an under-belt antenna 143 (shown in Figure 2) and a single directional antenna 148 (shown in Figure 3). In the exemplified embodiment, directional antenna 148 is a phased array antenna. The construction of phased array antenna 148 is described in PCT/EP2024/076864, which as noted above is incorporated herein by reference.

The hardware and software components of the ABD machine 130, including the optical scanner 146 and antenna 148, are illustrated as being part of a single ABD machine 130. However, those skilled in the art will appreciate that one or more of the components could be provided in separate devices, each of which are in suitable communication with the ABD machine 130.

Passenger 104 utilises an electronic bag tag (EBT) 150 that they attach to their bag 139. Electronic bag tags such as EBT 150 are electronic devices that include a display screen, a radio receiver, and a processor that executes firmware to receive image data via the radio receiver and display the image on the display screen. EBTs invariably also include an onboard battery to supply power to the device.

EBTs are designed to be used in existing baggage handling systems and to this end function in a way that mimics a paper bag tag. In this regard, EBTs electronically display the display elements of a paper bag tag (including the bag tag license plate number barcode, passenger details and destination) so that they can be read by the optical scanners of the baggage handling system. EBTs receive the bag tag display elements using a mobile application and a wireless radio protocol (typically NFC). In some cases, the mobile application operates in conjunction with a self-service kiosk that the passenger operates to perform the check-in or bag tag printing process. Typically, this involves the passenger 104 checking into their flight online and opting to drop a bag. A bag tag license plate number is issued to the passenger 104 and is linked to the relevant booking in the departure control system 118. The mobile application prompts the passenger 104 to use the e-ink bag tag option. The passenger 104 presses a button on the EBT 104 and ensures that only a single EBT is in proximity to the mobile device. The mobile application updates the license plate number that is displayed on the EBT to match the booking. The passenger 104 is then permitted to proceed with checking in bags.

Embodiments of the present invention provide a baggage handling system that permits passengers 104 to use EBTs but with fewer steps than existing processes and thus lower friction points at the airport 102.

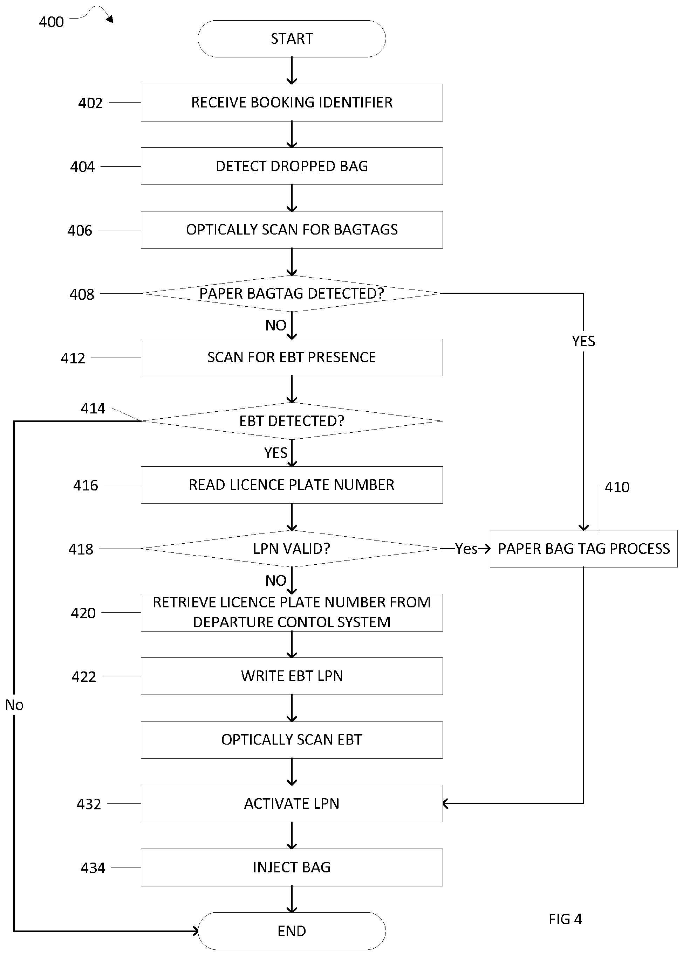

Processes 300 that are performed by components of the baggage handling system 100 according to embodiments of the present invention are illustrated by reference to the flow chart in Figure 4.

Process 400 commences at step 402, at which passenger 104, having checked into their flight using the airline app 108, approaches ABD machine 130 and interacts with the user interface 136 displayed thereon by scanning a mobile barcode from the airline app 108 or by other means. The passenger interaction has the result of the ABD machine 130 receiving a booking identifier (step 402) associated with the passenger's booking.

Once the ABD machine 130 receives the booking identifier, the touchpoint client application 134 utilises the booking identifier to request booking information associated with the identified booking from the touchpoint server application 142. To fulfil the request, the touchpoint server application 142 retrieves the booking information from the PSS 120 of the departure control system 118 and communicates the retrieved information to the touchpoint client application 134. The booking information includes any bag tag licence numbers that were generated by the departure control system 118 during the process of the passenger 104 checking in.

At step 404 (and shown in Figure 2), the passenger 104 drops their bag 139 onto the conveyor 141 of the ABD machine 130 and the ABD machine 130, through the ABD application 138 and inbuilt weight and/or intrusion sensors, detects the bag drop.

At step 406, the ABD application 138 controls the optical scanner 146 to scan the area of the conveyor 141 for bag tags. The scanning is conducted to detect the presence of either paper bag tags or the corresponding display components displayed on an EBT. If a bag is detected first, its existence and position may be used to make the search for the bag tag more efficient. For example, the area of search for a bag tag may be narrowed to sectors on or near surfaces of the detected bag. Similarly, if a bag is detected and no bag tag is detected, an instruction may be given for the passenger 104 to change the position of the dropped bag so that the bag tag is more visible. This may be particularly relevant for irregularly-shaped bags or packages.

At step 408, the ABD application 138 determines whether the optical scanner 246 has detected the presence of a paper bag tag. In the event that the ABD application 138 detects a paper bag tag, processing proceeds to step 410 at which the ABD application 138 performs processing pertinent to a paper bag tag. Paper bag tag processing typically involves the ABD application 138 verifying the validity of the licence plate number that the ABD application 138 optically read from the paper bag tag. The ABD application 138 typically calls a suitable function on the touchpoint server application 142 using the scanned licence plate number as an argument (for example checkLPN(PaperBagTag.lpn)). The touchpoint server application 142 typically calls a similar function on the departure control system to perform the validation. The departure control system 118 returns the result of the validation to the touchpoint server application 142 that in turn communicates the result to the ABD application 138.

In the event that the licence plate number is verified as valid, processing proceeds to step 432, at which the ABD application 138 calls a function on the touchpoint server application 142 to activate the licence plate number in the departure control system 118 using the licence plate number as an argument (for example activateLPN(PaperBagTag.lpn)). Activating the licence plate number typically involves making a record in the PSS 120 that the licence plate number has been scanned by the optical scanner 146.

Once the ABD machine 130 receives confirmation from the departure control system 118 that the licence plate number has been activated (typically by way of the touchpoint server application 142), processing proceeds to step 434 at which the ABD application 138 causes the bag 139 to be injected into the baggage handling system.

Returning to step 408, in the event that the ABD application 138 does not detect a paper bag tag, processing proceeds to step 412 at which the touchpoint client application 134 utilises the antenna 143 or 148 to detect the presence of an EBT in proximity to the ABD machine 130. Figure 2 illustrates EBT proximity detection using either an under-belt antenna 143 or a plurality of non-directional antennas 148A-148C that perform triangulation to compute the geographical location of the EBT 150. Figure 3 illustrates EBT proximity detection using a phased array antenna 148 that utilises beamforming to detect the geographical location of the EBT 150. Each of the under-belt antenna 143, non-directional antennas 148A-148C and phased array antenna 148 can utilise a variety of RF protocols to localise the EBT 150, including UHF, RFID and Bluetooth.

After EBT proximity detection is complete, processing proceeds to step 414 at which the touchpoint client application 134 determines whether an EBT was detected. In the event that no EBT is detected, the process terminates either with or without triggering an external process such as assistance by a human agent.

In the event that an EBT is detected, the process proceeds to step 416 at which the touchpoint client application 134 causes the ABD application 138 to read a licence plate number on the EBT using optical scanning. Processing then proceeds to step 418 at which the touchpoint client application 134 determines whether the licence plate number read by the ABD application (if any) is valid. The touchpoint client application 134 performs the validity verification by calling a function on the touchpoint server application 142 using the licence plate number as an argument (for example checkLPN(EBT.lpn)). The touchpoint server application 142 communicates with the departure control system 118 to execute the function and returns the result to the touchpoint client application 134.

A valid licence plate number on an EBT is consistent with the EBT being electronically updated with the licence plate number before the bag 139 is placed on the conveyor 141 of the ABD machine 130. In this instance, processing proceeds to step 410, where paper bag tag processes are performed (namely optical bag tag scanning prior to bag activation and injection).

An invalid licence plate number is consistent with the touchpoint client application 134 being unable to read any licence plate on the EBT or with an EBT that is read not passing a validity check. For example, the EBT may still be displaying an old licence plate number from a previous flight. In either scenario, processing proceeds to step 420, at which the touchpoint client application 134 retrieves a licence plate number from the departure control system 118. The touchpoint client application 134 retrieves the licence plate number from the departure control system 118 by calling a function on the touchpoint server application 142 using the booking information as an argument (for example getLPN(bookinginfo)). The touchpoint server application 142 communicates with the departure control system 118 to execute the function and returns the result (namely the licence plate number) to the touchpoint client application 134.

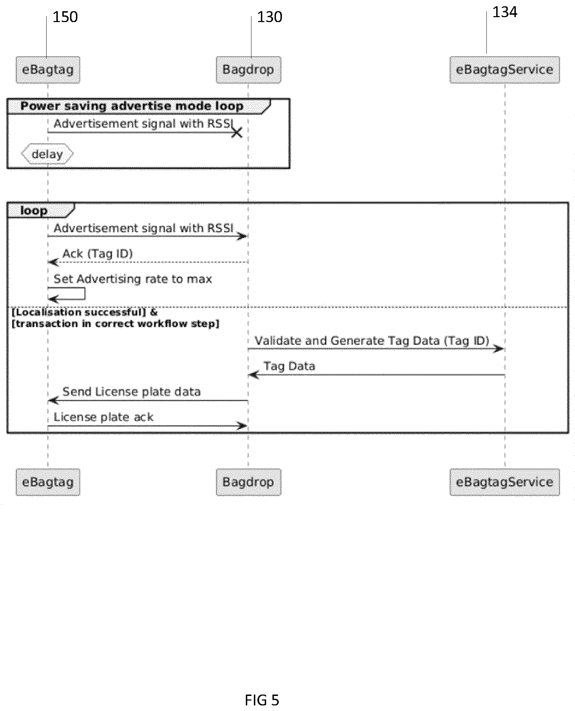

Upon receipt of the licence plate number at the ABD machine 130, touchpoint client application 134 calls a function (for example WriteEBTLPN(lpn)) that utilises the antenna 143 or 148 to write the licence plate number to the EBT 150. Writing a licence plate number to an EBT 150 is illustrated in Figure 5. The EBT 150 executes power saving and general operation loops. The general operation loop involves the EBT 150 transmitting an advertisement signal to the ABD machine 130 that includes a tag identification (tag id) for the EBT. Upon receipt of the advertising signal, the ABD measures the received signal strength and determines a received signal strength indicator (RSSI). After determining the RSSI, the ABD machine 130 transmits an acknowledgement signal to the EBT 150 that includes the tag id. The EBT 150 sets the advertising rate to a maximum. The EBD next calls a function in the touchpoint client application 134 using the tag id as an argument that validates the EBT and generates tag data therefor. The function returns the tag data to the ABD 130. The ABD utilises the antenna 148 to write the licence plate data to the EBT 150. Upon receipt and successful writing of the licence plate data, the EBT 150 transmits an acknowledgement to the ABD 130.

After writing the licence plate number to the EBT 150, processing proceeds to step 424, at which the touchpoint client application 134 causes the ABD application 138 to optically scan the EBT 150 and read the licence plate number that was written thereto in step 422. Optically scanning the written licence plate is performed to verify that the written licence plate is consistent with the pertinent licence plate stored in the departure control system 118. This verification step can detect technical anomalies occurring during writing to the EBT 150. The verification process involves the ABD application 138 comparing the licence plate number received from the departure control system 118 in step 420 with the licence plate number obtained from optically scanning the EBT 150.

In the event that the licence plate numbers are equal, processing proceeds to step 432, which as described above involves the ABD application 138 activating the licence plate number in the departure control system 118. After the licence plate number has been activated, the process proceeds to step 424, which as described above, involves the ABD application 138 injecting the bag into the baggage handling system. The process terminates after the bag is injected.

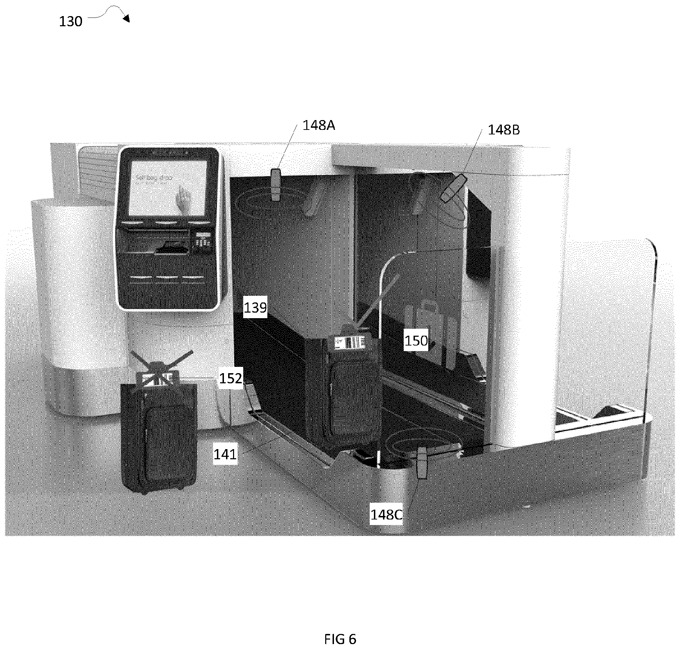

Figure 6 illustrates the use of a plurality of non-directional antennas 148A-148C to detect the presence of a first EBT 150 that is located on the conveyor 141 of the ABT machine 130 and a second EBT 152 that is located adjacent thereto. It is important for the touchpoint client application to distinguish between the EBTs in this scenario to ensure that the licence plate number is written to the correct EBT and that a licence plate number cannot be scanned when it is not on the conveyor 141.

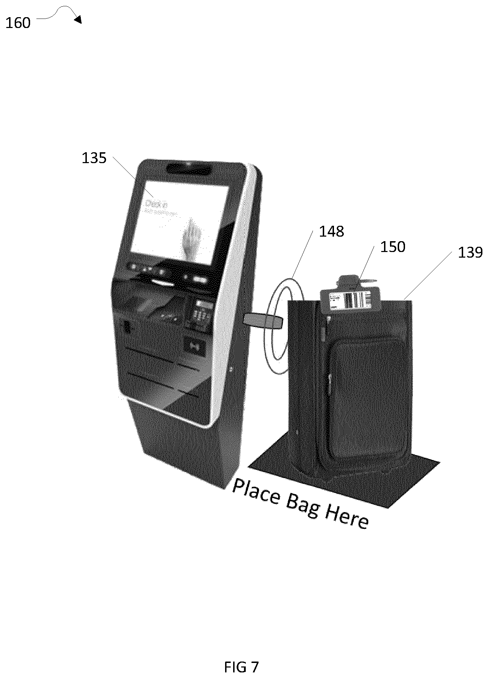

Figure 7 illustrates an alternative embodiment of a touchpoint device 160 that implements aspects of the present invention, in the form of a self-serve kiosk. The passenger is able to utilise the touchpoint client application 134 that executes on kiosk 160 and the antenna 148 to automatically update the licence plate on the EBT 150.

Figure 8 provides a block diagram of a computer processing system 1200 configurable to implement embodiments and/or features described herein. The touchpoint devices in accordance with embodiments of the present invention will typically incorporate at least some of the components of the computer processing system 1200. System 1200 is a general purpose computer processing system. It will be appreciated that Figure 8 does not illustrate all functional or physical components of a computer processing system. For example, no power supply or power supply interface has been depicted, however system 1200 will either carry a power supply or be configured for connection to a power supply (or both). It will also be appreciated that the particular type of computer processing system will determine the appropriate hardware and architecture, and alternative computer processing systems suitable for implementing features of the present disclosure may have alternative components to those depicted.

Computer processing system 1200 includes at least one processing unit 1202. The processing unit 1202 may be a single computer processing device (e.g. a central processing unit, graphics processing unit, or other computational device), or may include a plurality of computer processing devices. In some instances all processing will be performed by processing unit 1202, however in other instances processing may also be performed by remote processing devices accessible and useable (either in a shared or dedicated manner) by the system 1200.

Through a communications bus 1204 the processing unit 1202 is in data communication with a one or more machine readable storage (memory) devices which store instructions and/or data for controlling operation of the processing system 1200. In this example system 1200 includes a system memory 1206 (e.g. a BIOS), volatile memory 1208 (e.g. random access memory such as one or more DRAM modules), and non-volatile memory 1210 (e.g. one or more hard disk or solid state drives).

System 1200 also includes one or more interfaces, indicated generally by 1212, via which system 1200 interfaces with various devices and/or networks. Generally speaking, other devices may be integral with system 1200, or may be separate. Where a device is separate from system 1200, connection between the device and system 1200 may be via wired or wireless hardware and communication protocols, and may be a direct or an indirect (e.g. networked) connection.

Wired connection with other devices/networks may be by any appropriate standard or proprietary hardware and connectivity protocols. For example, system 1200 may be configured for wired connection with other devices/communications networks by one or more of: USB; FireWire; eSATA; Thunderbolt; Ethernet; OS/2; Parallel; Serial; HDMI; DVI; VGA; SCSI. Other wired connections are possible.

Wireless connection with other devices/networks may similarly be by any appropriate standard or proprietary hardware and communications protocols. For example, system 1200 may be configured for wireless connection with other devices/communications networks using one or more of: infrared; Bluetooth; Wi-Fi; near field communications (NFC); Global System for Mobile Communications (GSM), Enhanced Data GSM Environment (EDGE), long term evolution (LTE), wideband code division multiple access (W-CDMA), code division multiple access (CDMA). Other wireless connections are possible.

Generally speaking, and depending on the particular system in question, devices to which system 1200 connects-whether by wired or wireless means-include one or more input devices to allow data to be input into/received by system 1200 for processing by the processing unit 1202, and one or more output device to allow data to be output by system 1200. Example devices are described below, however it will be appreciated that not all computer processing systems will include all mentioned devices, and that additional and alternative devices to those mentioned may well be used.

For example, system 1200 may include or connect to one or more input devices by which information/data is input into (received by) system 1200. Such input devices may include keyboards, mice, trackpads, microphones, accelerometers, proximity sensors, GPS devices and the like. System 1200 may also include or connect to one or more output devices controlled by system 1200 to output information. Such output devices may include devices such as a CRT displays, LCD displays, LED displays, plasma displays, touch screen displays, speakers, vibration modules, LEDs/other lights, and such like. System 1200 may also include or connect to devices which may act as both input and output devices, for example memory devices (hard drives, solid state drives, disk drives, compact flash cards, SD cards and the like) which system 1200 can read data from and/or write data to, and touch screen displays which can both display (output) data and receive touch signals (input).

System 1200 may also connect to one or more communications networks (e.g. the Internet, a local area network, a wide area network, a personal hotspot etc.) to communicate data to and receive data from networked devices, which may themselves be other computer processing systems.

System 1200 may be any suitable computer processing system such as, by way of non-limiting example, a server computer system, a desktop computer, a laptop computer, a netbook computer, a tablet computing device, a mobile/smart phone, a personal digital assistant, a personal media player, a set-top box, a games console.

Typically, system 1200 will include at least user input and output devices 1214 and a communications interface 1216 for communication with a network such as network 106 of environment 100.

System 1200 stores or has access to computer applications (also referred to as software or programs)-i.e. computer readable instructions and data which, when executed by the processing unit 1202, configure system 1200 to receive, process, and output data. Instructions and data can be stored on non-transient machine readable medium accessible to system 1200. For example, instructions and data may be stored on non-transient memory 1210. Instructions and data may be transmitted to/received by system 1200 via a data signal in a transmission channel enabled (for example) by a wired or wireless network connection.

Applications accessible to system 1200 will typically include an operating system application such as Microsoft Windows^{®}, Apple OSX, Apple IOS, Android, Unix, or Linux.

System 1200 also stores or has access to applications which, when executed by the processing unit 1202, configure system 1200 to perform various computer-implemented processing operations described herein. For example, and referring to the environment of Figure. 1 above, passenger device 106 includes an airline app 108 which configures the passenger device 106 to perform the described client system operations. Similarly, airline application server 112 includes an airline application 114 which configures the airline application server 112 to perform the described server system operations.

The flowcharts illustrated in the figures and described above define operations in particular orders to explain various features. In some cases, the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by different systems or applications.

Variations and modifications may be made to the parts previously described without departing from the spirit or ambit of the disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method of updating an electronic bag tag (150) at a touchpoint device (130) comprising:
receiving (402) a booking identifier, the booking identifier associated with a booking stored in a departure control system accessible to the touchpoint device;
detecting (412) the presence of an electronic bag tag in proximity to the touchpoint device;
receiving (420) a baggage identifier associated with the booking;
generating (422) an optically-readable baggage identifier that incorporates the baggage identifier; and
transmitting the optically-readable baggage identifier to the electronic bag tag for display thereon.

2. A method according to claim 1, further comprising:
optically scanning (416) the electronic bag tag for a scanned baggage identifier;
comparing (418) the scanned baggage identifier with the baggage identifier; and
selecting a baggage handling operation depending on a result of the comparison between the scanned baggage identifier and the baggage identifier.

3. A method according to claim 2, wherein the result of the comparison between the scanned baggage identifier and the baggage identifier is that the scanned baggage identifier and the baggage identifier are the same and wherein the selected baggage handling operation is causing the baggage identifier to be activated (432) in the departure control system.

4. A method according to any one of the preceding claims, wherein the touchpoint device (130) is a bag drop that includes a conveyor (141) and wherein the method further comprises detecting (404) the presence of the electronic bag tag on or above the conveyor.

5. A method according to claim 4, comprising using a directional antenna (148) or multiple non-directional antennas (148A, 148B, 148C) to detect the presence of the electronic bag tag (150) on or above the conveyor (141).

6. A method according to claim 5, wherein the directional antenna is a phased array antenna.

7. A method according to claim 6, wherein the phased array antenna operates in a frequency band associated with Bluetooth communications.

8. A method according to any one of claims 4 to 7, further comprising detecting the presence on the conveyor of a bag and performing the detection of the presence of the electronic bag tag in dependence on the existence and position of the detected bag.

9. A method according to any one of the preceding claims, further comprising, after detecting the presence of the electronic bag tag in proximity to the touchpoint device:
optically scanning (416) the electronic bag tag for an existing baggage identifier;
comparing (418) the existing baggage identifier with the baggage identifier; and
in the event that the existing baggage identifier and the baggage identifier are not the same, transmitting the optically-readable baggage identifier to the electronic bag tag to overwrite the existing baggage identifier.

10. A method according to any one of the preceding claims, further comprising, upon receiving the booking identifier, automatically executing client software pertinent to the booking identified and establishing a connection to a pertinent departure control system.

11. A method according to any one of the preceding claims, further comprising receiving a confirmation signal from the electronic bag tag indicating successful loading and display of the optically-readable baggage identifier.

12. A method according to claim 11, further comprising, after receiving the confirmation signal, causing the booking to be updated in the departure control system.

13. A method according to any one of the preceding claims, wherein the touchpoint device receives the booking identifier by scanning an optically readable code such as a barcode or QR code on the electronic bag tag or on a mobile device.

14. A touchpoint device (130) for use in a baggage handling system, the touchpoint device having a processor (1200) and a computer-readable medium storing computer-executable instructions, which, when executed by the processor, cause the touchpoint device to perform the method according to any of claims 1 to 13.
